# EUROPEAN PATENT SPECIFICATION

(11) **EP 2 531 050 B1**
(45) Date of publication and mention of the grant of the patent: **11.12.2013**
(21) Application number: 11703274.8
(22) Date of filing: 25.01.2011
(51) Int. Cl.: A23N 7/00, A23N 15/08

(54) **DEVICE FOR PROCESSING BULBOUS NATURAL PRODUCTS.**
VORRICHTUNG ZUR VERARBEITUNG VON NATÜRLICHEN KNOLLENPRODUKTEN
DISPOSITIF DE TRAITEMENT DE PRODUITS NATURELS BULBEUX

(30) Priority: 04.02.2010 NL 1037688
(43) Date of publication of application: 12.12.2012
(73) Proprietor: Machinefabriek Eillert B.V., 7071 PW ULFT (NL)
(72) Inventor: BACKUS, Stefanus, Michael, Marie, 5914 CX Venlo (NL)
(74) Representative: Algemeen Octrooi- en Merkenbureau B.V.
(86) International application number: PCT/NL2011/050041
(87) International publication number: WO 2011/096797

(56) References cited:
- GB-A- 1 292 058
- US-A- 2 445 881
- US-A- 3 606 917
- US-A- 3 623 524
- US-A- 3 812 952
- US-A- 3 861 295

## Description

The present invention relates to a device for processing bulbous natural products having a natural axis, comprising processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element. The present invention in particular, but not exclusively, relates to the processing of bulbous plants such as in particular onions, in particular for removing the skin therefrom.

One of the characteristics of natural products is that they vary in size within a particular band width. In the case of onions, for example, the diameters typically vary between 5 cm and 15 cm. A device as referred to in the introductory paragraph is marketed by Sormac B.V. of Venlo. Said device is an onion peeler, type indication USM-X100A, by means of which the peeling of onions can be carried out automatically.

The object of the present invention is to provide a device as described in the introduction which, in spite of a very competitive cost price, is capable of processing bulbous natural products, for example for removing the skin from bulbous plants, with a very high degree of reliability in a fully or at least highly automated process. In order to accomplish that object, the device according to the invention is characterised in that the positioning means further comprise levelling means for arranging the central axes of natural products on successive support elements at the same level relative to the processing means. The central axis is the line relative to which a natural product is substantially rotationally symmetrically shaped. Examples of such products are apples, oranges, onions, shallots but also even potatoes. It will be understood that such natural products are not exactly rotationally symmetrical, which is not required in the case of the present invention, therefore. In the case of onions, the natural axis extends from the head to the root of the onion. The use of levelling means makes it possible to present natural products to the processing means in a very uniform manner, in spite of their size. Within the framework of the present invention, processing means are typically made up of cutting means for making preparatory horizontal and/or vertical cuts in a bulbous natural product, such as a bulbous plant, or at least in the skin thereof. This obviates or at least lessens the need to manipulate said processing means themselves so as to adjust their position to the size of the onion. This has a positive effect as regards the constructional simplicity of the device.

An embodiment of the levelling means which is very advantageous, because of its simplicity, is obtained if the levelling means comprise at least one pair of a first pressure element and a second pressure element, which first pressure element is vertically movable between a first lower position and a first upper position, in which first lower position the first pressure element is disposed in the path of a natural product and, as a result of contact with the natural product, moves against the action of resistance means from the first lower position in the direction of the first upper position to a first intermediate position, thereby exerting a downward pressure on the upper side of the bulbous natural product, and which second pressure element abuts against the first conveying element and/or a support element from the bottom side at a position opposite the first pressure element, being vertically movable between a second upper position and a second lower position, as well as connecting means for moving the second pressure element from the second upper position in the direction of the second lower position to a second intermediate position in dependence on the extent of the movement of the first pressure element between the first lower position and the first intermediate position. Thus it is possible to detect the size of a natural product to be processed without the need to use sensors or the like, and nevertheless ensure, without the need to provide an associated electronic control system, that natural products which are successively presented to processing means and which vary in size will each be presented in the most optimum manner to said processing means, thereby enabling the processing means to operate in a very precise and efficient manner.

The connecting means are preferably designed to ensure that the absolute values of the extent of the movement of the first pressure element from the first lower position to the first intermediate position and the extent of the movement of the second pressure element from the second upper position to the second intermediate position be kept equal. The movement of the first pressure element and the movement of the second pressure element are thus of equal extent, so that it is relatively easy to arrange the axes of successive natural products of varying size at the same vertical level.

If the levelling means comprise a number of successive pairs of first pressure elements and second pressure elements, the levelling means can be advantageously operational during various successive processing steps carried out on the bulbous natural product.

According to a very advantageous embodiment, the positioning means comprise a pressure belt extending at least substantially parallel to and above the first pressure element for exerting a downward pressure on natural products supported by support elements, which pressure belt is designed to be driven at the same speed as that at which the first flexible conveying element is driven. Using the pressure belt, the natural products can be pressed firmly onto the support elements by the pressure belt, which moves along with the products, while being processed by the processing means, as a result of which the natural products will retain a stable position in spite of the mechanical forces being exerted thereon by the processing means.

It is very advantageous in that regard if the first pressure element comprises a pressure member which is provided on the side of the pressure belt remote from the first pressure element. The pressure belt thus forms part of the levelling means, as it were, since it is not so much the pressure member but rather the pressure belt that makes contact with the natural products. As a result, the exertion of pressure on the natural products by the pressure belt does not interfere with the contact between the levelling means and the natural products.

The pressure element preferably comprises a disc-shaped pressure member which is rotatable about a central axis. The pressure element can thus roll along with the natural product, as it were, and as a result offers minimal mechanical resistance to natural products being conveyed in the conveying direction.

A constructionally very simple embodiment is obtained if the connecting means comprise a lever mechanism both for the first pressure element and for the second pressure element, which lever mechanisms are mechanically interconnected.

The advantages of the invention come to the fore in particular, but not exclusively, if the processing means comprise removing means for removing material from the bulbous natural product on two opposite sides of the bulbous natural product around the natural axis thereof. Such removing means may be drills, for example, which drill to a certain depth in the natural product along the natural axis thereof so as to remove material at that location.

Such removing means advantageously comprise two preferably disc-shaped vertical blades, which extend side by side in the path of the natural products, parallel to the conveying direction, for cutting off two opposite ends of the bulbous natural product. In the case of onions, said cutting off concerns the cutting off of the head and the root of an onion.

At least one of the two vertical blades, preferably both vertical blades, are advantageously laterally movable between an inner position and an outer position relative to the conveying direction. The adjustment that takes place is a lateral adjustment rather than a vertical adjustment, therefore, making it possible to cut off only the minimum amount necessary from the ends of the bulbous natural products in dependence on the size of the bulbous natural product, regardless of the size thereof.

It is furthermore preferable in that regard if the device comprises adjusting means for adjusting the position of said at least one vertical blades between the inner position and the outer position in dependence on the size of a natural product to be subjected to the operation of the vertical blade in question. Such adjusting means can also be used for adjusting the depth to which drilling in a natural product will take place in the case that the removing means comprise a drill as described above.

The adjusting means furthermore preferably comprise at least one reciprocable scanning element, which scanningly moves along the surface of a bulbous natural product during the passage of said natural product, wherein the movement of the scanning element while scanning the bulbous natural product is a measure for the adjustment of the position between the inner position and the outer position of said at least one vertical blade during operation thereof.

It is furthermore very advantageous if the scanning element comprises a scanning member which is rotatable about a first axis of rotation, which first axis of rotation preferably includes an angle of 5-45 degrees, more preferably 10-30 degrees, with a vertical. The normal to the axis of rotation through the scanning member can thus be oriented at the centre of the bulbous natural product, whilst the scanning of natural products by the scanning member can take place a relatively short distance above the natural axis of the bulbous natural product.

The stability of the bulbous natural product during the scanning thereof is further enhanced if the adjusting means comprise two opposite scanning elements for simultaneously scanning opposite parts of the surface of the bulbous natural product, wherein the first axes of rotation associated with the two rotatable scanning members are preferably inclined towards each other.

The advantages specifically connected with the use of a scanning element as described above may also apply to prior art devices. In that case a device for processing bulbous natural products having a natural axis is concerned which comprises processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element, wherein the processing means comprise removing means for removing material from the bulbous natural product on two opposite sides of the bulbous natural product around the natural axis thereof, and wherein the device comprises adjusting means for adjusting the position of said removing means during operation thereof, which adjusting means comprise at least one reciprocable scanning element, which scanningly moves along the surface of a bulbous natural product during the passage of said natural product, wherein the movement of the scanning element while scanning the bulbous natural product is a measure for the adjustment of the position between the inner position and the outer position of said removing means during operation thereof. Possibly, but not necessarily, the removing means comprise two vertical blades, as already explained in the foregoing.

A very useful use of the positioning means is obtained if the positioning means position the bulbous natural product in such a manner that said at least one scanning element scans the bulbous natural product at a fixed distance above the middle of the height of the bulbous natural product, regardless of the size of the bulbous natural product. A separate vertical adjustment of the scanning element is not necessary in that case.

The precision with which the removing means operate is positively affected if the removing means are operative in the immediate vicinity of a pair of the first pressure element and the second pressure element. The pressure effect on the bulbous natural product is maximal at that location.

The use of the positioning means according to the invention is in particular relevant if the processing means comprise first cutting means for forming at least one horizontal cut parallel to the conveying direction in a skin of the bulbous natural product. The positioning means in that case make it possible to form the horizontal cut in a very precise manner at the desired height in a constructionally simple manner.

The first cutting means preferably comprise four blades, which each make a cut in a single horizontal plane in a quadrant of the circumference of the bulbous natural product. Thus a horizontal circumferential cut can be made (at least outside the area of the head and the root of the bulbous natural product that may have been cut off) without a cutting element actually being moved around the bulbous natural product or without the bulbous natural product itself rotating.

Such first cutting means can also be advantageously used with prior art devices. In that case a device for processing bulbous natural products having a natural axis is concerned which comprises processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element, wherein the processing means comprise first cutting means for making at least one horizontal cut, parallel to the conveying direction, in a skin of the bulbous natural product, which first cutting means comprise four blades, which each make a cut in a single horizontal plane in a quadrant of the circumference of the bulbous natural product.

To enable the eventual removal of a skin from natural products, it is preferable if the positioning means position the bulbous natural product in such a manner that the first cutting means make a horizontal cut at the middle of the height of the bulbous natural product or a number of horizontal cuts in mirror symmetry relative to the middle of the height of the bulbous natural product.

It is possible to achieve a stable support of natural products, whilst in addition a transfer of natural products to and from the support elements can take place in a reliable manner, if according to another preferred embodiment each support element comprises two side-by-side plate-shaped upright elements having a concave upper edge, which are oriented parallel to the conveying direction.

Wear on the first conveying element, and thus maintenance or replacement thereof, can be minimized if the endless flexible first conveying element is a belt-like element.

To make it possible to absorb the local vertical movements of the conveying element caused by the operation of the levelling means, it is furthermore preferable if the endless flexible first conveying element is made of an elastic material.

An accurate synchronisation between the transport of natural products and the operation of processing means can be achieved in particular if the endless flexible first conveying element is provided with evenly spaced engaging elements, which engaging elements mate with further engaging elements provided on at least one of the two first pulley means, which engaging elements are furthermore preferably provided at the same longitudinal positions of the endless flexible first conveying element as the longitudinal positions where the support elements are provided.

To realise an automated supply of individual natural products to the conveying means, the device preferably comprises feeding means for feeding natural products to the conveying means, said feeding means comprising two endless flexible second conveying elements, which are each passed over at least two second pulley means which are rotatable about respective second axes of rotation, which two second conveying elements extend mirror-symmetrically relative to a vertical plane of symmetry, wherein parts of the second conveying elements extend upward in side-by-side, parallel relationship along an inclined feed path toward the first flexible conveying element, said feeding means further comprising regularly spaced pusher means provided on each of the second conveying elements for, paired together, pushing individual natural products upwards along an inclined feed path, as well as a first support element which supports the natural products during at least part of the feed path and which causes said products to rotate in such a manner that the natural axis of the bulbous natural product extends in horizontal direction, perpendicularly to the inclined feed path.

The second axes of rotation are preferably inclined. Furthermore preferably, said axes of rotation include an angle of 5-75 degrees, more preferably 15-45 degrees, with a vertical. Thus, the second conveying elements move apart at the upper two pulley means, so that space is provided for the accommodating first conveying element.

The use of supply means comprising inclined second axes of rotation is also very advantageously possible with prior art devices. In that case a device for processing bulbous natural products having a natural axis is concerned which comprises processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element, wherein the device further comprises feeding means for feeding natural products to the conveying means, said feeding means comprising two endless flexible second conveying elements, which are each passed over at least two second pulley means which are rotatable about respective second axes of rotation extending at an angle of 5-75 degrees with a vertical, which two second conveying elements extend mirror-symmetrically relative to a vertical plane of symmetry, wherein parts of the second conveying elements extend upward in side-by-side, parallel relationship along an inclined feed path toward the first flexible conveying element, said feeding means further comprising regularly spaced pusher means provided on each of the second conveying elements for, paired together, pushing individual natural products upwards along an inclined feed path, as well as a first support element which supports the natural products during at least part of the feed path and which causes said products to rotate in such a manner that the natural axis of the bulbous natural product extends in horizontal direction, perpendicularly to the inclined feed path.

To realise an adequate transfer of natural products, the spacing between two pusher means that jointly form a pair of pusher means pushed up along the feed path is at most 100 %, preferably at most 50 % larger than the width of each support element, so that a support element fits between two pusher means, whilst in addition the width of each support element provides a sufficiently wide support base for natural products being supplied by pusher means, which products have a dimension at least equal to the spacing between two pusher means.

Within the same framework, it is generally preferable if the paths of the pairs of pusher means and the support elements are such that the support element in question extends between the pusher elements of the respective pair of pusher means upon transfer of a natural product from the feeding means to the conveying means.

The above aspect of the present invention regarding the feeding means can also be applied advantageously with prior art devices. In that case a device for processing bulbous natural products having a natural axis is concerned which comprises processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element, wherein the device further feeding means for feeding natural products to the conveying means, said feeding means comprising two endless flexible second conveying elements, which are each passed over at least two second pulley means which are rotatable about respective second axes of rotation, which two second conveying elements extend mirror-symmetrically relative to a vertical plane of symmetry, wherein parts of the second conveying elements extend upward in side-by-side, parallel relationship along an inclined feed path toward the first flexible conveying element, said feeding means further comprising regularly spaced pusher means provided on each of the second conveying elements for, paired together, pushing individual natural products upwards along an inclined feed path, as well as a first support element which supports the natural products during at least part of the feed path and which causes said products to rotate in such a manner that the natural axis of the bulbous natural product extends in horizontal direction, perpendicularly to the inclined feed path, wherein either the second axes of rotation are inclined or the paths of the pairs of pusher means and the support elements are such that the support element in question extends between the pusher elements of the respective pair of pusher means upon transfer of a natural product from the feeding means to the conveying means.

In order to present the natural products to the conveying means in the correct orientation, i.e. with their natural axis extending transversely to the conveying direction, it is preferable if the first support element is an endless, flexible conveying element which is passed over at least two third pulley means that are rotatable about respective horizontally extending third axes of rotation, wherein the first support element can be driven at a speed which is different from the speed at which the second conveying elements are driven. As a result of the different speed of the support element, each natural product will tend to orient itself such that the natural axis thereof will extend transversely to the conveying direction.

To bridge the distance that may separate the first support element and the first conveying element it is advantageous if a second, stationary support element is provided in line with the first support element for supporting the natural products until they reach the conveying means.

According to another preferred embodiment, the device comprises a processing station that connects to the first conveying element, which processing station comprises pairs of clamping elements which are movable along an endless, preferably circular path, clamping elements forming pair of clamping elements being movable toward and away from each other for clampingly receiving natural products from a support element between them at a takeover position and releasing the natural products after having conveyed said natural products, clamped between the clamping elements, along part of the circular path, said processing station further comprising rotation means for jointly rotating a natural product and the clamping elements that clamp the bulbous natural product between them about aligned central axes of the clamping elements, said processing means further comprising second cutting means for making at least one circumferential vertical cut parallel to the conveying direction in the surface of the bulbous natural product during the clamped transport and during the rotation of the bulbous natural product by the rotation means.

The advantages of the present invention in particular come to the fore if the positioning means position the bulbous natural product in such a manner that clamping elements engage the bulbous natural product at the middle of the height of the bulbous natural product so as to accommodate said product between them, regardless of the size of the bulbous natural product. Thus, no eccentricity exists between the axis of the bulbous natural product and the axis of the clamping elements during the rotation of the clamping elements with a natural product clamped between them.

The transfer of natural products at a takeover position of natural products to the clamping elements can take place with a high degree of reliability if the direction of the path of the clamping elements and the direction of the path of a support element include an angle of at most 60 degrees, preferably at most 30 degrees, more preferably at most 5 degrees, with each other at the location of the takeover position. In the latter situation, the paths of the clamping elements and the path of a support element just or substantially just touch each other.

The above preferred embodiment can be realised in particular if the endless path is in its entirety located above the first conveying element.

The typical aspects of the two preferred embodiments discussed above can also be advantageously applied with prior art devices. In that case a device for processing bulbous natural products having a natural axis is concerned which comprises processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element, wherein the device comprises a processing station that connects to the first conveying element, which processing station comprises pairs of clamping elements which are movable along an endless, preferably circular path, clamping elements forming a pair of clamping elements being movable toward and away from each other for clampingly receiving natural products from a support element between them at a takeover position and releasing the natural products after having conveyed said natural products, clamped between the clamping elements, along part of the circular path, said processing station further comprising rotation means for jointly rotating a natural product and the clamping elements that clamp the bulbous natural product between them about aligned central axes of the clamping elements, said processing means further comprising second cutting means for making at least one circumferential vertical cut parallel to the conveying direction in the surface of the bulbous natural product during the clamped transport and during the rotation of the bulbous natural product by the rotation means, and wherein furthermore the direction of the path of the clamping elements and the direction of the path of a support element include an angle of at most 60 degrees with each other at the location of the takeover position and/or if the endless path is in its entirety located above the first conveying element.

Using mechanically simple parts, a vertical cut can be made if the second cutting means comprise at least one vertical blade which can be moved into and out of the path of natural products, and which even more preferably is capable of reciprocating pivoting movement about a horizontal pivot axis, which horizontal pivot axis extends on the outer side of the circular path. Sufficient space is available on said outer side for providing said at least one vertical blade in a constructionally simple manner.

It may also be very advantageous to use such second cutting means in prior art devices. In that case a device for processing bulbous natural products having a natural axis is concerned which comprises processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element, wherein the device further comprises a processing station that connects to the first conveying element, which processing station comprises pairs of clamping elements which are movable along an endless, preferably circular path, clamping elements forming a pair of clamping elements being movable toward and away from each other for clampingly receiving natural products from a support element between them at a takeover position and releasing the natural products after having conveyed said natural products, clamped between the clamping elements, along part of the circular path, said processing station further comprising rotation means for jointly rotating a natural product and the clamping elements that clamp the bulbous natural product between them about the natural axis of the bulbous natural product, said processing means further comprising second cutting means for making at least one circumferential vertical cut parallel to the conveying direction in the surface of the bulbous natural product during the clamped transport and during the rotation of the bulbous natural product by the rotation means, which second cutting means comprise at least one vertical blade which can be moved into and out of the path of natural products and which is capable of reciprocating pivoting movement about a horizontal pivot axis, which horizontal pivot axis extends on the outer side of the circular path.

Quite preferably, the device comprises pneumatic control means for pneumatically controlling the clamping and releasing of natural products by the clamping elements. Such pneumatic control of the clamping elements has a positive effect on the mechanical simplicity of the device.

A very suitable embodiment can be obtained if the pneumatic control means comprise a pneumatic channel which is interrupted and opened again during every rotation of a wheel on whose outer circumference the clamping elements are provided for moving the clamping elements toward and away from each other.

The device according to the invention preferably comprises blowing means for blowing off skin parts of natural products that have been formed by the operation of the processing means.

If a processing station comprising clamping elements as discussed in the foregoing is used, it is furthermore preferable if the blowing means comprise a blow nozzle, to which a further pneumatic channel connects, which pneumatic channel is interrupted and opened again during every rotation of a wheel on whose outer circumference the clamping elements are provided for interrupting or allowing the supply of air to the blow nozzle.

In order to achieve that the blowing off of the parts of a skin takes place with a minimum air consumption, the blowing means preferably comprise a first blow nozzle and a second blow nozzle, which first blow nozzle communicates with a first pressure source via a first further pneumatic channel and which second blow nozzle communicates with a second pressure source via a second further pneumatic channel, wherein the pressure from the first pressure source is different from the pressure from the second pressure source. Said first blow nozzle and said second blow nozzle can be effectively employed by, for example, selectively connecting the pressure sources to the associated blow nozzle on the basis of detections made by means of a visual sensor.

With a view to limiting the amount of space that is taken up, it is preferable if the first blow nozzle is disposed in the second blow nozzle.

According to another preferred embodiment, the blowing means, or at least a blow nozzle thereof, are jointly rotatable with a wheel on whose outer circumference the clamping elements are provided. Because the blow nozzle moves along with the wheel, the blowing off of a skin part need not take place instantaneously but during part of the circular path along which a natural product is conveyed by the wheel.

The invention will be explained in more detail below by means of a description of an example of a possible embodiment of the invention, in which reference is made to the following figures:
Figure 1 is an isometric view of the parts of the device according to the invention that are most relevant to the invention;
Figures 2, 3 and 4 are an isometric view, a side view and another isometric view, respectively, of a feed system that forms part of the device shown in figure 1;
Figures 5, 6 and 7 are two isometric views and a side view, respectively, of the pressure mechanism used in the device shown in figure 1;
Figure 8 is an isometric view of an assembly forming part of the device shown in figure 1 for making vertical cuts;
Figures 9a and 9b are front views of the assembled of figure 8 during the processing of onions of varying size;
Figures 10, 11 are an isometric view and a side view, respectively, of means for making horizontal cuts that form part of the device shown in figure 1;
Figures 12a-12c are top plan views of the means shown in figure 10 during successive phases;
Figure 13 is a side view of a conveyor belt with a second processing unit;
Figure 14 is a top plan view of the processing unit of figure 13;
Figure 15 is a partially sectional isometric view of the processing unit; and
Figure 16 is a schematic view of an onion.

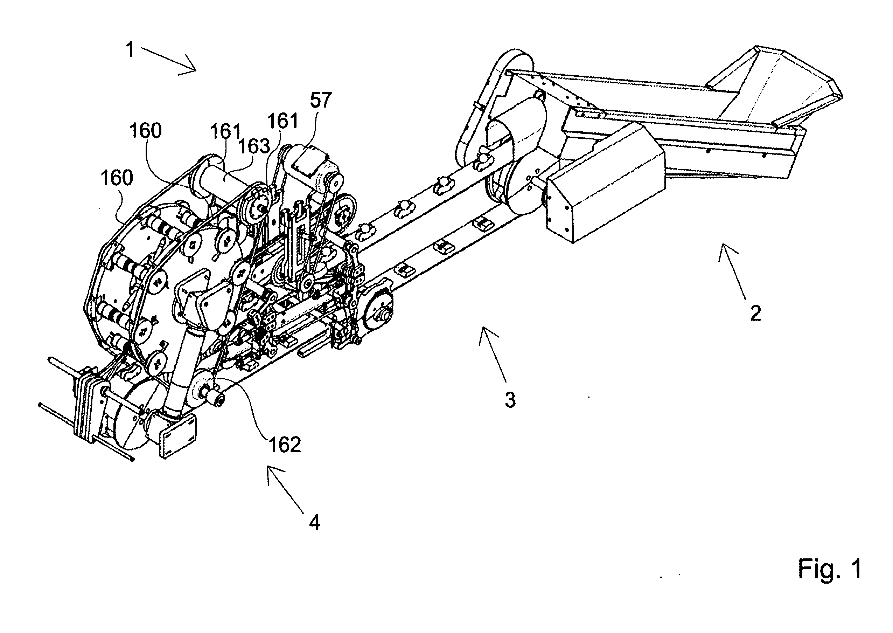

Figure 1 shows a device 1 by means of which onions, which by nature vary in size, can be peeled fully automatically. The device 1 will be referred to below as "onion peeling machine". The onion peeling machine 1 comprises a frame (not shown for the sake of clarity in figure 1), via which the onion peeling machine 1 is supported on a ground surface and which connects the various parts of the onion peeling machine together. The onion peeling machine 1 is made up of three successive parts, viz. a feed system 2, a first processing unit 3 and a second processing unit 4.

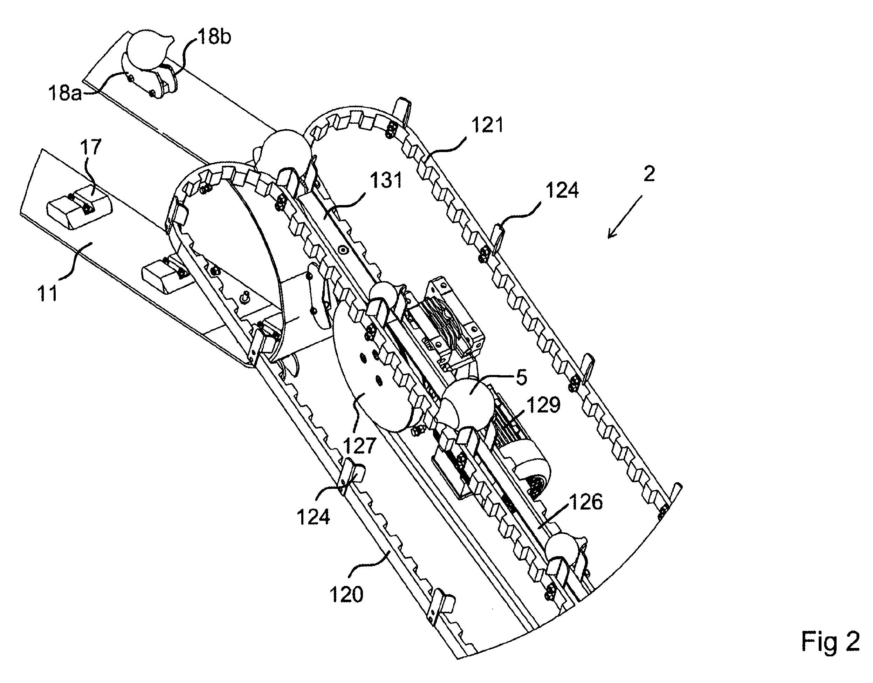

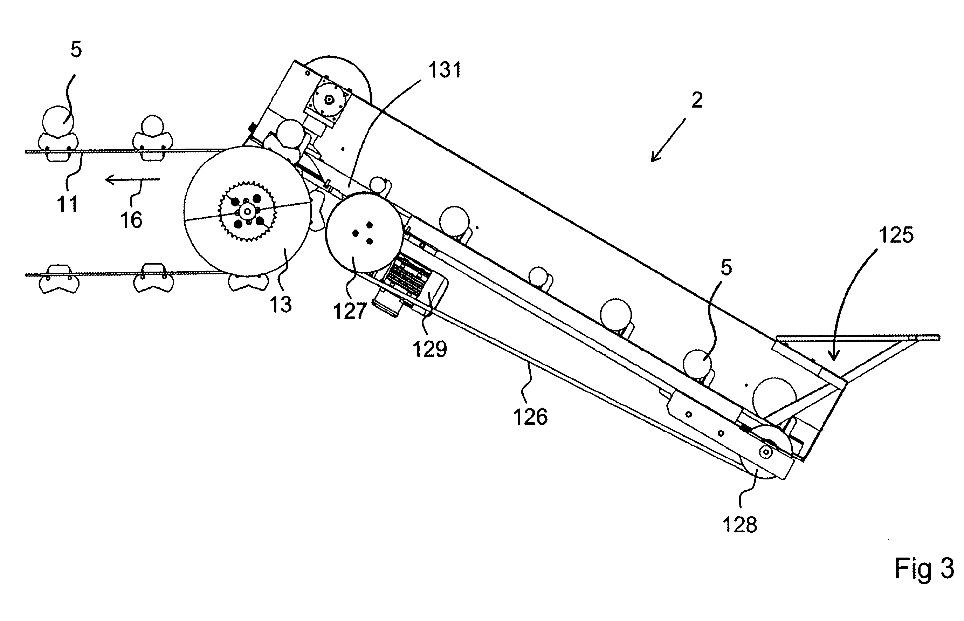

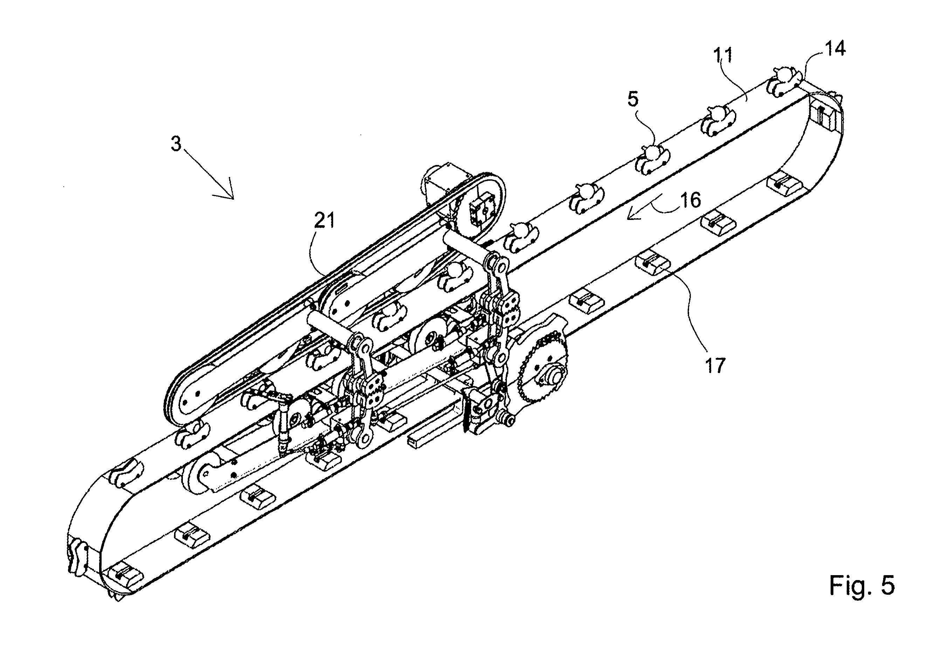

Figures 2, 3 a 4 relate to the feed system 2. Before discussing said feed system 2 with reference to figures 2, 3 and 4, the first processing unit 3, to which in particular figures 5-12c relate, will be considered.

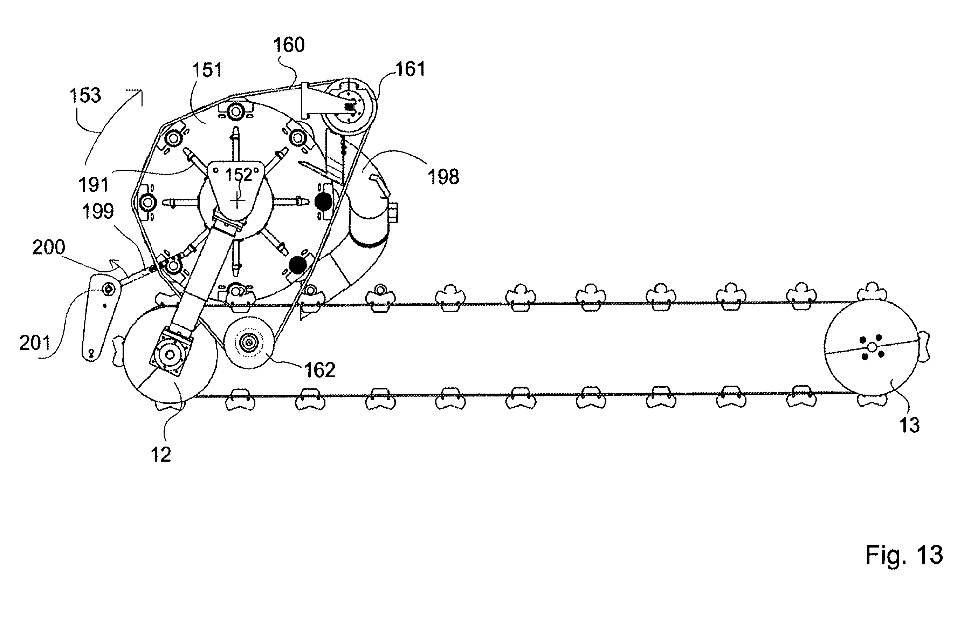

The first processing unit 3 comprises an endless belt-like conveyor belt 11, which is made of a flexible, elastic plastic material. The conveyor belt 11 is passed over two pulleys 12, 13 (see figure 13). Support elements 14 are attached to the conveyor belt 11 on the outer side thereof. The support elements 14 are spaced a regular distance apart. Between the pulleys 12, 13, the conveyor belt 11 extends at least substantially horizontally. In use, the support elements 14 present on the horizontal upper part of the conveyor belt 11 support onions that have been supplied to the support elements, in a manner yet to be explained, by means of the feed system 2. The onions 5 are conveyed in a conveying direction 16.

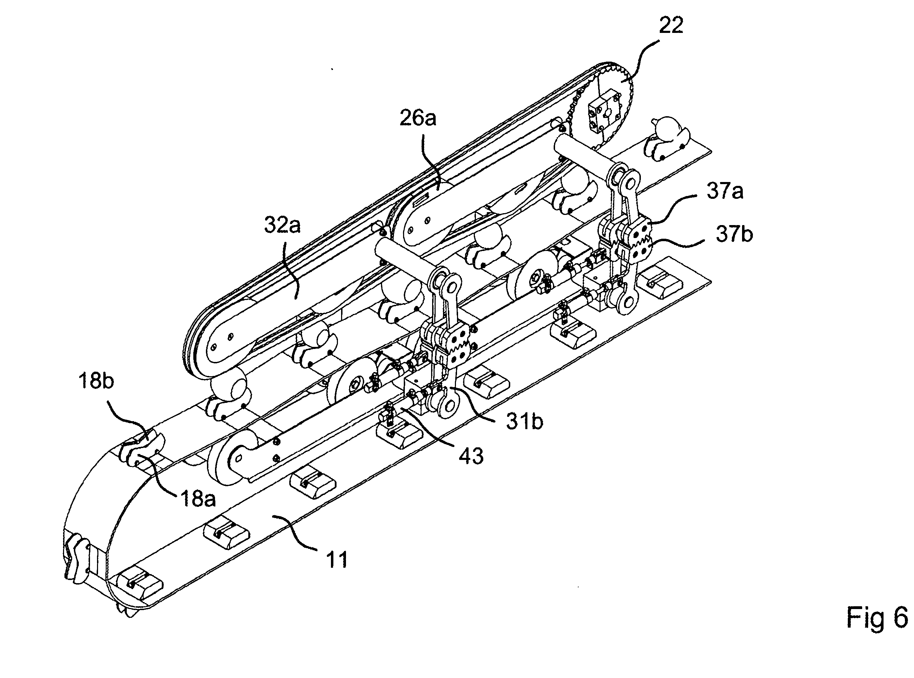

On the inner side of the conveyor belt 11, a block 17 is attached to the conveyor belt 11 opposite each support element 14, which blocks 17 mate with complementarily shaped recesses in the pulleys 12, 13. Each support element 14 comprises two side-by-side plates 18a, 18b extending parallel to the conveying direction 16 (see also figures 2 and 6), each having a V-shaped upper edge whose apex angle is relatively obtuse. The sides of the plates 18a and 18b remote from each other (which determine the width of each support element 14) are spaced 32 mm apart. The feed system 2 feeds onions 5 to the support elements 14 in such a manner that the natural axis of each onion 5 extends in horizontal direction, transversely to the conveying direction 16. The V-shape of the upper edge of the support plates 18a, 18b of each support element 14 ensures that the axis of each onion 15 is located at a defined longitudinal position of the conveyor belt 11.

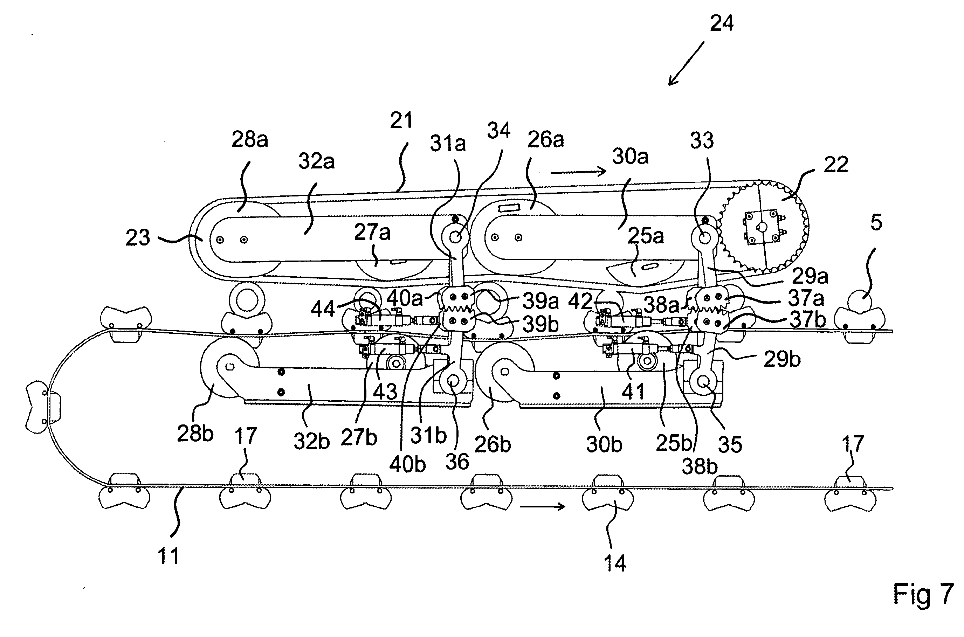

The first processing unit 3 is designed for successively removing the so-called head and root of an onion 5, for making a horizontal cut in the skin of the onion, outside the area of the cut-off head and root, along the circumference of the onion 5 and subsequently transferring each onion 5 to the second processing unit 4. The first processing unit 3 is to that end provided with an endless, flexible pressure belt 21 above the upper part of the conveyor belt 11. The pressure belt 21 may also be configured as an endless chain. The pressure belt 21 is passed over a drive pulley 22 and a return pulley 23. In use, driving the pressure belt 21 via the pulley 22 takes place in such a manner that the lower part of the pressure belt 21 and the upper part of the conveyor belt 11 will move at the same speed and in the same direction. In use, onions 5 (see also figure 7) are clamped between the aforesaid parts of the pressure belt 21 and the conveyor belt 11, so that mechanical forces can be exerted on a clamped onion 5 for subjecting the onion to a processing step without the onion 5 in question becoming detached from the support element 14.

The first processing unit 3 comprises quadruple levelling means 24, by which any onion, regardless of its size, can be vertically positioned relative to the processing elements (yet to be discussed) in such a manner that the central axes thereof will be located at the same vertical level at all times. Thus, a constant quality of the processing steps to which the onions 5 are to be subjected in the first processing unit 3 can be realised, without there being a need for vertical adjustment of the processing elements themselves.

The levelling means 24 comprise four pairs of upper pressure elements 25a, 26a, 27a, 28a and lower pressure elements 25b, 26b, 27b, 28b, respectively. The two pressure elements associated with each pair are disposed directly above one another. The pressure element 28a in fact corresponds to the pulley 23. The pressure elements 25a, 26a, 27a and 28a are located on the inner side of the pressure belt 21 and exert pressure on the upper side of the lower part of the pressure belt 21. The pressure elements 25b, 26b, 27b and 28b are positioned directly below the upper part of the conveyor belt 11 and exert pressure on the underside thereof. The configuration of the pressure elements 25b, 26, 27b and 28b is such that the blocks 17 can pass said pressure elements without impediment.

The levelling means comprise right-angled lever arms 29a-32a and 29b-32b for each of the pressure elements 25a-28a and 25b-28b, respectively. The lever arms 29a-32a and 29b-23b are capable of reciprocating pivoting movement about pivot axes which extend perpendicularly to the plane of drawing in figure 7 and which are located in the immediate vicinity of the corner of the right-angled shape of the lever arms in question. The lever arms 29a, 30a can pivot independently of each other relative to the pivot axis 33, the lever arms 31a, 32a can pivot independently of each other relative to the pivot axis 34. The lever arms 29b, 30b can pivot independently of each other relative to the pivot axis 35 and the lever arms 31 a, 32a can pivot independently of each other relative to the pivot axis 36. In figure 7, parts of the lever arms 29a-32a and 29b-32 are hidden by one another. The pressure elements 25a-28 are provided on one of the ends of the associated lever arm 29a-32a, just like the pressure elements 25b-28b are provided on one of the ends of the lever arms 29b-32b. Toothed elements 37a-40a and 37b-40b are provided at opposite ends of the lever arms in question. The teeth of the toothed elements 37a-37b, 38a-38b, 39a-39b and 40a-40b mesh with each other, thereby realising a mechanical transmission between the right-angled lever arms 29a and 29b, 30a and 30b, 31 a and 31b and 32a and 32b. A pneumatic spring 41-44 acts on each of the lever arms 29b-32b, which spring is supported on the frame (not shown). Because of the action of said pneumatic springs 41-44, the upper pressure elements 25a-28a exhibit a tendency to move downward, whilst the lower pressure elements 25b-28b exhibit a tendency to move upward. Because of this, the upper pressure elements 25a-28a will at all times abut against the inner side of the lower part of the pressure belt 21, whilst the lower pressure elements 25b-28b will at all times abut against the underside of the upper part of the conveying belt 11.

The operation of the levelling means 24 is as follows. Onions 5 each supported by a support element 14 are conveyed toward the levelling means 24 as a result of the conveyor belt 11 being driven. Although the lower part of the pressure belt 21 extends substantially parallel to the upper part of the conveyor belt 11, the lower part of the pressure belt 21 is slightly inclined in the direction of the conveyor belt 11 from the pulley 22. As a result, the onion 5 will come into contact with the pressure element 21 at some point. The pressure belt 21 thus holds the onion 5 firmly down on the support element 14. The conveyor belt 11 then conveys the onion further toward the pressure element 25, which will pivot upward against the action of the pneumatic spring 41 to an extent which depends on the size of the onion 5. Because of the transmission at the toothed elements 37a, 37b, the pressure element 25b moves downward to the same extent as the pressure element 25a moves upward. Thus, space is created for the combination of the support element 14 and the onion 5 supported by said support element to pass the locations of the pressure elements 25a, 25b. Said creation of space takes place to the same extent at the upper side and at the bottom side of the onion 5. As a result, the middle of the height of the onion 5 will pass at the same vertical level between the pressure elements 25a and 25b at all times, regardless of the size of the onion. The skilled person will appreciate that the same situation applies between the pairs of pressure elements 26a and 26b, 27a and 27b, and 28a and 28b.

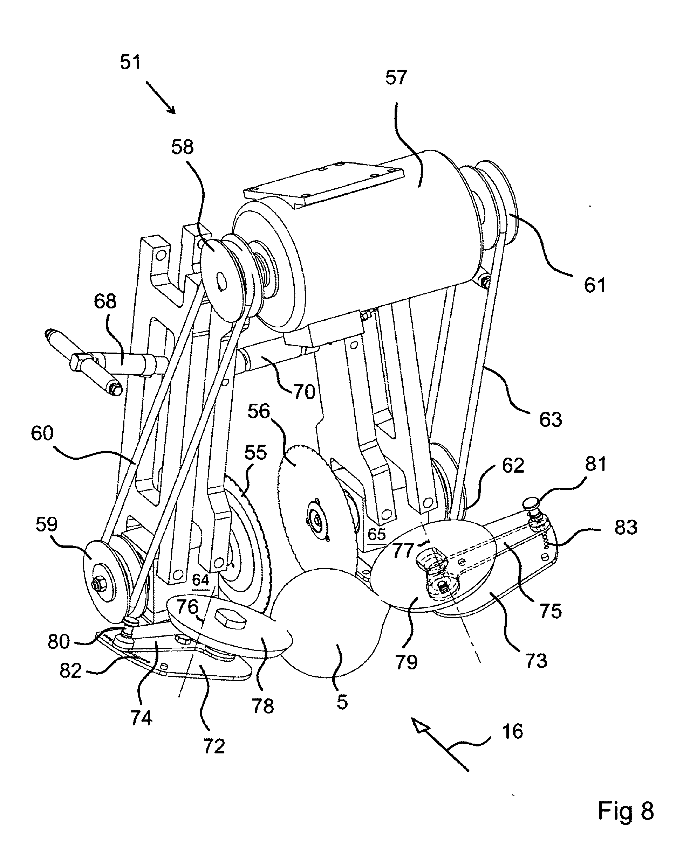

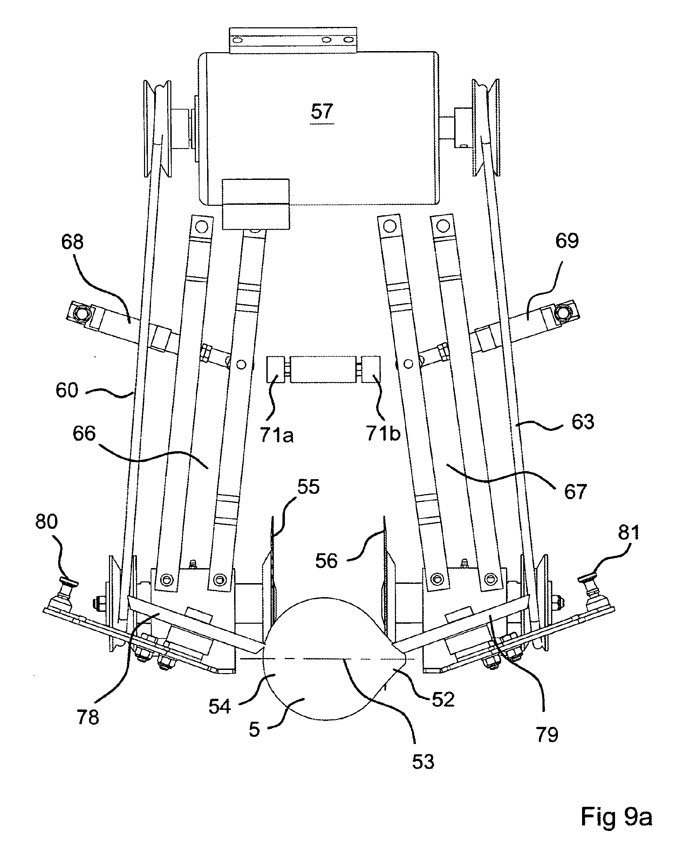

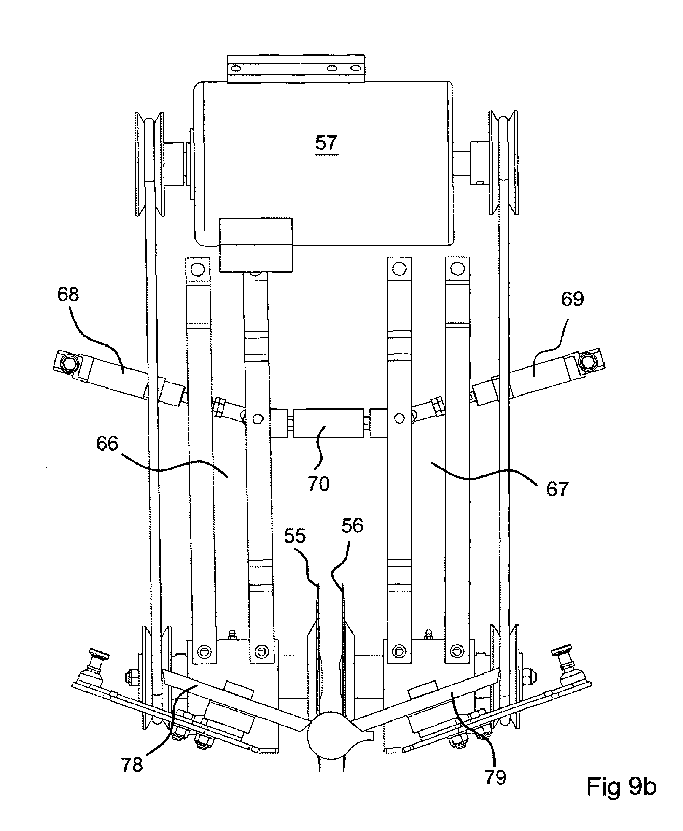

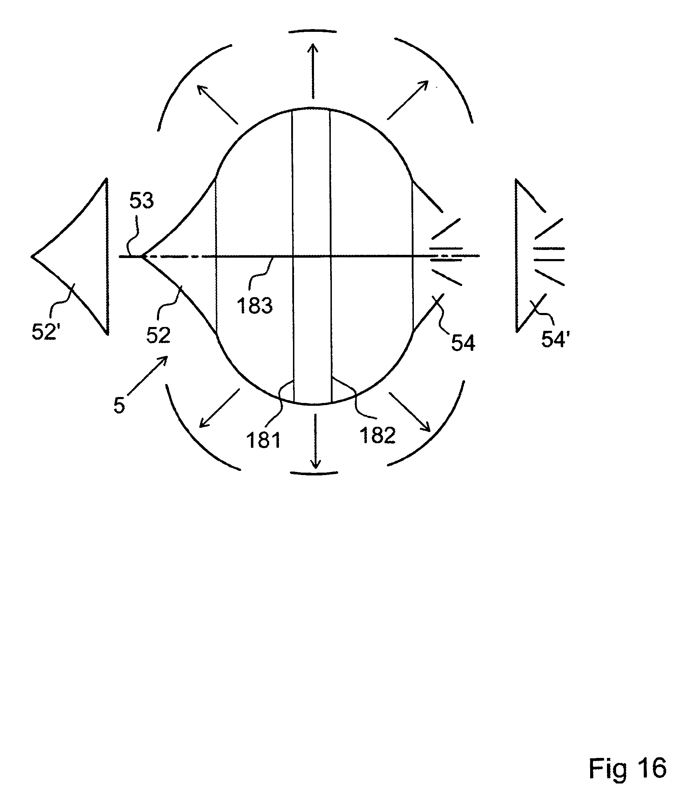

Figures 8 and 9 are isolated views of an assembly 51 associated with the first processing unit 3. When an onion 5 is to be peeled, the head 52 and the root 54 (see also figure 16), between which the natural axis 53 of the onion 5 extends, must be removed first. To that end the assembly 51 comprises two disc-shaped blades 55, 56, which are disposed in the path described by the onion 5 that is being conveyed in the conveying direction 16. The disc-shaped blades 55, 56 are driven by a motor 57 via respective pulleys 57, 59 and a belt 60 and via pulleys 61, 62 and a belt 63. The motor 57 is fixedly connected to the frame (not shown) of the onion peeling machine 1, more specifically of the first processing unit 3 thereof. The pulley 59 and the blade 55 are rotatably journalled relative to the bearing block 64, whilst the pulley 62 and the blade 56 are rotatably journalled relative to the bearing block 65. The bearing blocks 64 and 65 are provided with respective parallelogram mechanisms 66, 67 at their bottom ends. A pneumatic spring 68, 69 acts on one of the two vertical arms of each of the parallelogram mechanisms 66, 67, which spring presses the arm in question against a stop member 70 in a starting position. The stop member 70 is provided with a horizontally adjustable stop element 71a, 71b at each of its ends.

A plate 72, 73 extending at an angle of 20 degrees relative to the horizontal is rigidly connected to each of the bearing blocks 64, 65, with respect to which plate a hooked adjusting arm 74, 75 is pivotable about pivot axes 76, 77, which pivot axes 76, 77 are located in the corner of each of the adjusting arms 74, 75, and which are oriented perpendicular to the associated plate 72, 73. Scanning rollers 78, 79 being freely rotatable about their axes extending parallel to the pivot axes 76, 77, are provided on the facing ends of the adjusting arms 74, 75, whilst pin mechanisms 80, 81 are provided on the remote ends of the adjusting arms 74, 75, which mechanisms are to mate with one of the holes 82, 83 formed in an arched configuration around the axes 76, 77 in the plates 72, 73 . Adjustment of the pin mechanism 80, 81 to another hole 82, 83 will cause the scanning rollers 78, 79 to move sideways with respect to the conveying direction 16 to a certain degree.

The operation of the assembly 51 is as follows: when an onion 5 wishes to pass through the scanning rollers 78, 79, the onion 5, which is supported on a support element 14 and held in place thereon by the pressure belt 21, presses the scanning rollers 78, 79 outward. Because of the connection between the scanning rollers 78, 79 and the blades 55, 56, the blades 55, 56 will move outward as well against the action of pneumatic springs 68, 69. The parallelogram mechanisms 66, 67 ensure that the blades 55, 56 will remain exactly vertically oriented. The horizontal spacing between the blade 55 and the inner side of the scanning roller 78 or between the blade 56 and the inner side of the scanning roller 79 is determined by the adjustment of the pin mechanism 80, 81. Upon movement of the onion 5 in the conveying direction 16, the head 52 and the root 54 of the onion 5 will be cut off by the blades 55, 56. The assembly 51 is so positioned within the first processing unit 5 each that the scanning rollers 78, 79 are located in the immediate vicinity of the pressure elements 25a, 25b. Consequently, the central axes of every onion 5 that presses the scanning rollers 78, 79 aside will be located at the same vertical level. Accordingly, the scanning rollers 78, 79 will also scan each onion 5 at a point located exactly the same distance above the axis 53 of said onion, regardless of the size of said onion.

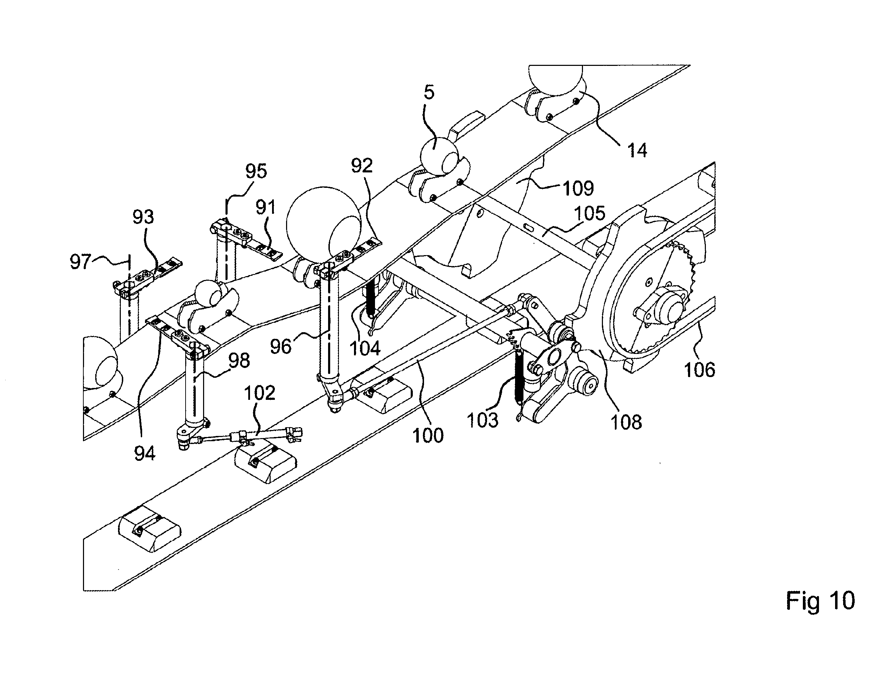

Downstream of the assembly 51, the first processing unit 3 comprises cutting means for making a horizontal cut in the circumference of onions 5 of which the head and the root have been removed. Said cutting means will be explained in more detail with reference to figures 10-12c. Four straight blades 91-94 are provided for making the horizontal cut in question, which blades are each capable of reciprocating pivoting movement about respective vertical pivot axes 95-98 relative to the frame of the first processing unit 3. Linkages 100, 101 are provided for effecting said reciprocating pivoting movement of the blades 91-94, which linkages are each in turn controlled by one of the two curve discs 108, 109, which are rigidly interconnected via a connecting shaft 105. The curve disc 108 is synchronised with the pulley 13 via a toothed belt 106. The blades 91, 94 are connected to pneumatic springs 99, 102, which are supported on the frame.

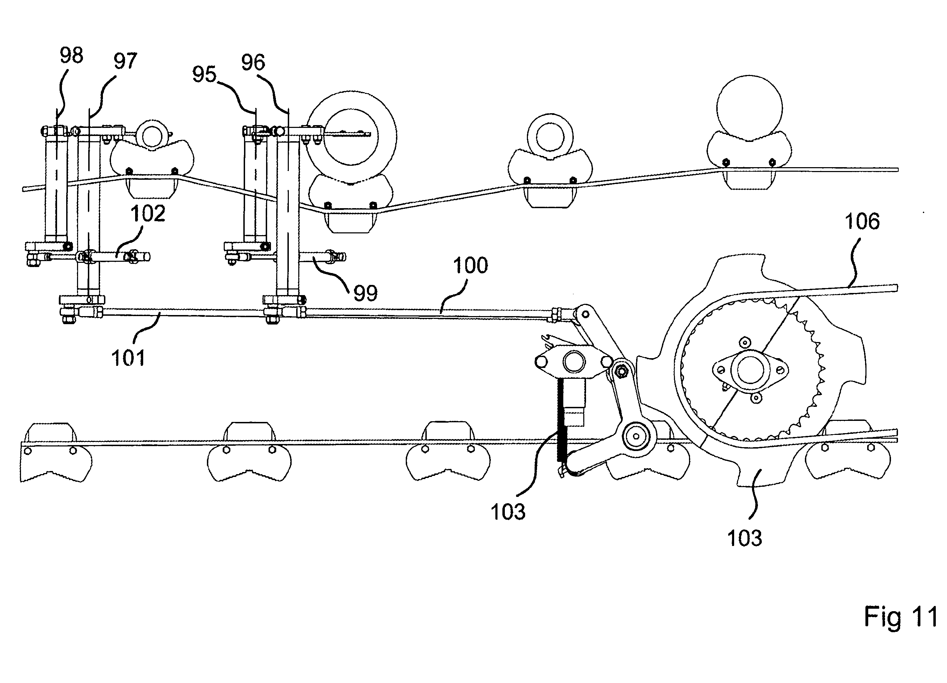

The blades 91, 92 are disposed in the immediate vicinity of the pressure elements 26a and 26b, whilst the blades 93, 94 are disposed in the immediate vicinity of the pressure elements 27a and 27b. As is clearly shown in particular in figure 11, this achieves that the onions 5 will be very precisely positioned at the level of the blades 91-94 at the middle of their height (or, in other words, at the level of their axis), regardless of the size of the onions 5.

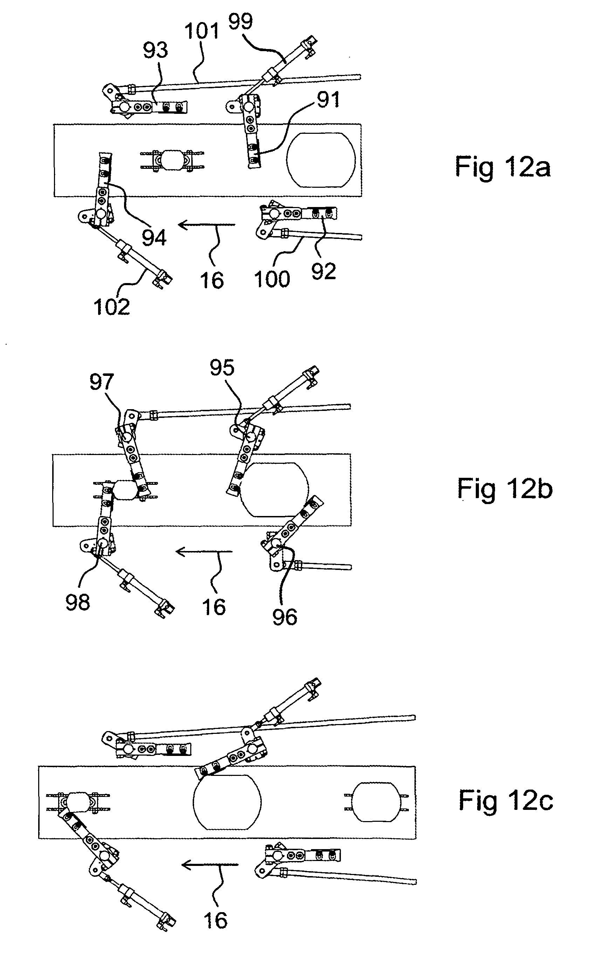

Figures 12a-12c show in top plan view three successive stages during the making of a horizontal cut. The blades 91-94 extend in the same horizontal plane. The pneumatic springs 99 and 102 ensure that, in a starting position, the blades 91 and 94 will extend transversely to the conveying direction 16 in the path of the onions 5. In the same starting situation the knives 92, 93 on the other hand, extend parallel to the conveying direction 16 and (seen in top plan view) beside the conveyor belt 11 (see figure 12a). Upon further movement of the onions 5 in the conveying direction 16, the blades 91 and 94 will come into contact with, initially, the front side of the onions 5. Upon movement ahead of the onions 5, the blades 91, 94 are pushed aside against the action of the pneumatic springs 99 and 102, with the blades 91 and 94 pivoting about their respective pivot axes 95 and 98 (figures 12b and 12c). During said movement, the blades 91 and 94 each make a horizontal cut in a front quadrant of the onion 5 in question. The blades 92 and 93 make a cut in the skin at the location of the rear two quadrants. The curve discs 108 and 109 are adjusted so that as soon as a support element 14 is about to pass one of the blades 92, 93, the blades 92, 93 in question will pivot from their position beside the conveyor belt 11 to a position transversely to the conveying direction 16, with the blades 92, 93 making a horizontal cut in the rear quadrants of the onions 5. The pressure force on the onions 5 required for the cutting operation of the blades 92, 93 is provided by springs 103, 104, which act on the linkage 100, 101 and on a part which is fixedly connected to the frame of the first processing unit 3. The horizontal cut thus realised is indicated at 183 in figure 16.

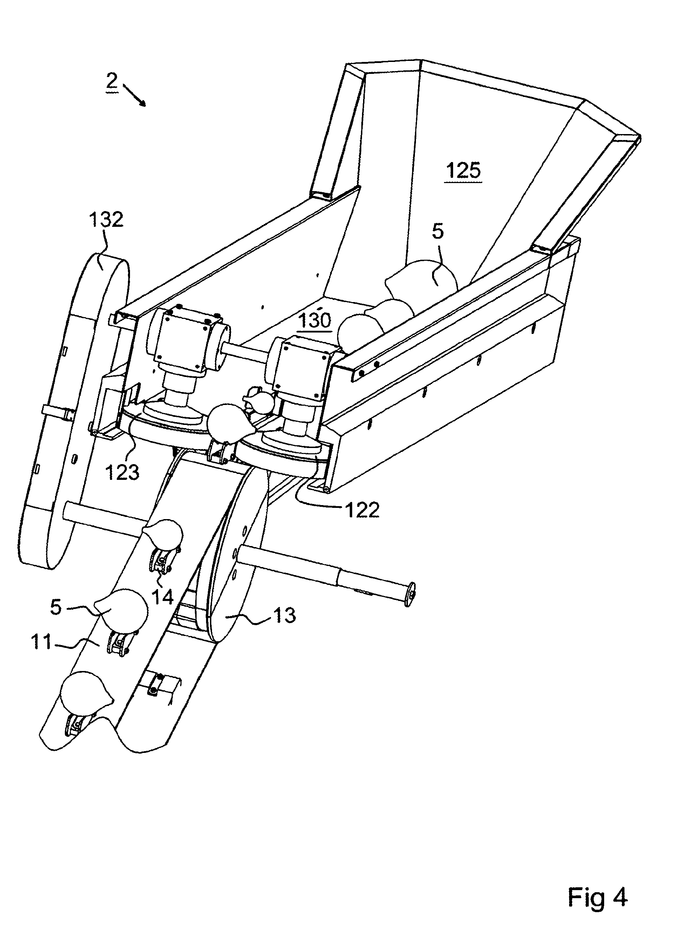

As already indicated at the beginning of the present description, a description will now be given of the feed system 2 with reference to figures 2-4. The feed system 2 comprises two toothed belts 120, 121 disposed in mirror symmetry, which are each passed over two toothed wheels, the upper toothed wheels 122, 123 of which are shown in figure 4, whilst the lower toothed wheels are not shown in the figures. The upper toothed wheels 122, 123 are driven via a transmission 132, which is also coupled to the pulley 13 for the conveyor belt 11, so that the conveyor belt 11 and the toothed belts 120, 121 are driven at a synchronised speed. The toothed belts 120, 121 extend at an inclination of about 30 degrees. The toothed belts 120, 121 are provided with regularly spaced pusher means 124. The toothed belts 120, 121 are driven at the same speed, being mutually aligned in such a manner that the pusher means 124 on facing sides of the toothed belts 120, 121 will be located beside each other, enabling them to jointly push an onion 5 upward from the hopper 125. The spacing between facing sides of opposite pusher means 124 is 35 mm.

An endless support belt 126 extends between the facing sides of the toothed belts 120, 121, which belt is passed over a vertical pulleys 127, 128. The pulley 127 is driven independently of the toothed belt s120, 121 by a motor 129 at a speed which will be different from that of the toothed belts 120, 121 in practice. Onions 5 being pushed up from the hopper 125 by two adjacent pusher means 124 associated with the respective toothed belts 120, 121 rest on the upper part of the support belt 126. Because of the different (in practically usually higher) speed thereof, the onions 5 will start to rotate about their unnatural axis, with each onion 5 automatically assuming an orientation such that the natural axis of each onion is oriented horizontally and transversely to the conveying direction. An additional result of said rotation of the onion 5 is that in case one pair of pusher means 124 should push up two or even more onions 5, the upstream onion(s) will roll down into the funnel 125 again via the rolling surface 130 thereof. The pusher means 124 jointly form essentially a V-shape, as a result of which the onion 5 that is in direct contact with the pusher means 124 can be pushed upward in a stable manner.

The pulley extends as far to the highest point of the feed system 2 as the pulleys 13 associated with the first processing unit 3 provides space for this, as is shown in particular in figures 2 and 3. A support strip 131 extends in line with the upper part of the conveyor belt 11, between said upper part and the upper part of the support belt 126, over which support strip 131 the onions roll ahead past the support belt 126.

To enable the transfer of onions 5 from the feed system 2 to the first processing unit 3, the conveyor belt 11 is so positioned relative to the inclined toothed belts 120, 121 and the conveyor belt 11 and the toothed belts 120, 121 are synchronised in such a manner that a support element 14 moves up between two pusher means 5 at the upper side of the feed system 2 for taking over an onion 5 exactly at the location where the pusher means 124 in question pushing the onion 5 in question ahead move apart in horizontal direction. The width of each support element 14 is for that reason slightly smaller than the spacing between the two pusher means 124 in question, so that sufficient space is provided for the support element 14.

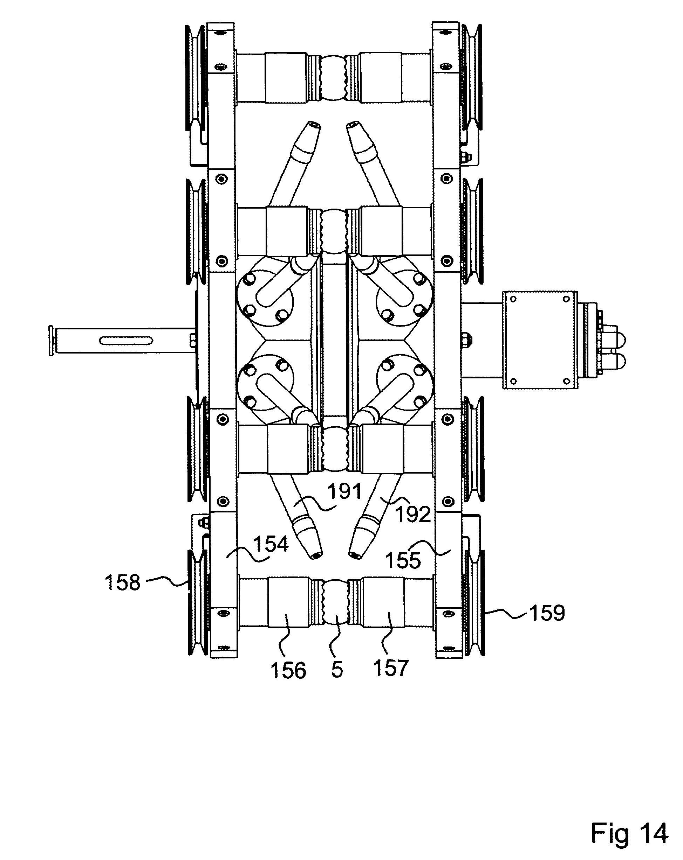

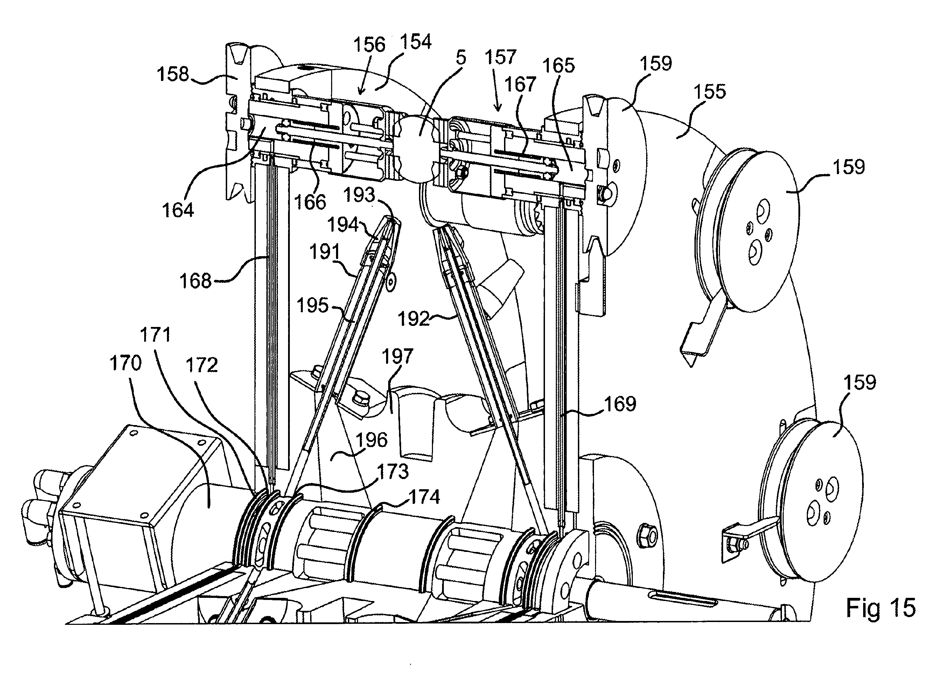

As already indicated at the beginning of the present description, the onion peeling machine 1 comprises a second processing unit 4 disposed at the downstream end of the first processing unit 3, which second processing unit 4 will be discussed in more detail hereinafter in the description of figures 13-15, whilst the second processing unit 4 is also shown in figure 1. The second processing unit 4 comprises a wheel member 151, which rotates in a direction of rotation 153 about a horizontal axis of rotation 152. The rotational speed of said wheel member is geared to the speed at which the conveyor belt 11 is driven.

The wheel member comprises two wheel discs 154, 155, as well as a hub member 197 which interconnects the wheel discs 154, 155 and rotates jointly therewith. Between said wheel discs 154, 155, pairs of pin-shaped clamping elements 156, 157 are provided. The pairs of clamping elements 156, 157 are provided in regularly spaced relationship on the circumference of the respective wheel discs 154, 155. The clamping elements 156, 157 can be moved towards and away from each other for picking up an onion 5 from a support element 14 at a takeover position and releasing an onion 5, respectively. The takeover position is located at the 6 o'clock position of the wheel member 151, with the circular path described by the clamping elements 156, 157 in its entirety extending above the conveyor belt 11. At the takeover position the circular path of the clamping elements 156, 157 touches the path of the onion 5 on the support element 14 in question (at least seen in the side view of figure 13). The aforesaid takeover position is located in the immediate vicinity of the pressure elements 28a and 28b, so that the axis of onions 5 being picked up by a pair of clamping elements 156, 157 at the takeover position will be located at the same vertical level at all times, regardless of the size of the onion 5. The relative positions of the first processing unit and the second processing unit are in that case such that the axis of the onion 5 being clamped between two clamping elements 156, 157 coincides with the axis of said pin-shaped clamping elements 156, 157.

The clamping elements 156, 157 are each rotatable about their axis relative to the associated wheel disc 154, 155. Pulleys 158, 159 are provided on the outer sides of the wheel discs 154, 155 for each of the clamping elements 156, 157 for the purpose of rotatably driving the clamping elements 156, 157 about their central axes. The pulleys, which are disposed approximately in the region between the 7 o'clock and the 12 o'clock positions in figure 13, comprise drive belts 160 passed over the circumference thereof, which drive belts are further passed over pulleys 161 and pulleys 162. The pulleys 161 are driven by a tube motor 163 independently of the rotary drive of the wheel member 151, which, as already said before, is synchronised with the drive of the conveyor belt 11. Thus the pairs of clamping elements 156, 157 are rotatably driven about their central axes in the aforesaid region between the 7 o'clock and the 12 o'clock positions.

To move the clamping elements 156, 157 towards and away from each other, a pneumatic cylinder 164, 165 is provided for each of the clamping elements 156, 157. In a starting situation, the action of compression springs 166, 167, which are likewise provided for each of the clamping elements 156, 157, causes the clamping elements 156, 157 to assume a moved-apart non-clamping position. Upon pneumatic actuation of the cylinders 164, 165, however, the clamping elements 156, 157 are moved together against the action of the compression springs 166, 167. Radial pneumatic channels 168, 169 extend within the wheel discs 154, 155 for pneumatically feeding the pneumatic cylinders 164, 165. The wheel discs 154, 155 rotate about a stationary shaft member 170. Sealing rings 171, 172, 173 and 174 are provided on the circumference of the shaft member 170 for each of the wheel discs 154, 155, which sealing rings connect to grooves in the hub member 197. The pneumatic channel 168 terminates at the side of the shaft member 170 between the sealing rings 171, 172. The space between the sealing rings 171, 172 is in communication with the pneumatic, axially extending channel within the shaft member 170 along that part of the circular path of the clamping elements 156, 157 where clamping of the onion 5 by the clamping elements 156, 157 is desired. Outside this area there is no such connection and the pneumatic channel 168 is not fed, as a result of which the pressure in the air cylinder 164 will drop and the clamping elements 156, 157 will move apart under the influence of the compression springs 166, 167. The area where clamping takes place is the area from the 6 o'clock position to approximately the 2 o'clock position for the wheel discs 154, 155 in figure 13. At the 6 o'clock position an onion 5 is clamped, therefore, whilst that very onion 5 is released at the 2 o'clock position. Upon being released, the onion 5 falls into a discharge channel 198.

The second processing unit 4 comprises a double vertical blade 199 approximately at the 7 o'clock position. Said double vertical blade 199 extends in the path of onions 5 being clamped between clamping elements 156, 157. The double blade 199 is pivotable about a horizontal pivot axis 201, which is located on the outer side of the path of the clamping elements 156, 157. As soon as a clamped onion 5 comes into contact with the double blade 199, said double blade 199 will pivot upwards in the direction indicated by the arrow 200 about the pivot axis 201 until the onion 5 passes the end of the double blade 199, whereupon the double bladed 199 will pivot back downward again under the influence of the force of gravity, possibly aided by spring means provided for that purpose. The clamped onion 5 rotates about its axis while being in contact with the double blade 199, as a result of which two circular vertical cuts 181, 182 (figure 6) are formed.

The two vertical cuts 181, 182 and the horizontal cut 183 divide the skin of the onion 5 into six parts; a pair of blow nozzles 191, 192 is provided for each pair of clamping elements 156, 157 for removing said parts of the skin of the onion 5 from the onion. The blow nozzles 191, 192 are mounted on the hub member 197 and rotate jointly with the associated clamping elements 156, 157 about the axis of rotation 152. The blow nozzles 191, 192 are directed at the onion 5. Downstream of the vertical double blade 199, the blow nozzles 191, 192 are pneumatically fed for blowing off the parts of the skin of the onion 5. Each of the blow nozzles 191, 192 has two outlet openings, viz. a central outlet opening 193 for discharging air under a relatively high pressure and, surrounding said central outlet opening 193, an outlet opening 194 for discharging air under a relatively lower pressure. The outlet opening 193 is in communication, via a pneumatic channel 195, with the space between the sealing rings 172 and 173 that is in communication with an axial high-pressure chamber in the interior of the shaft member 170 along that part of the circumference of the shaft member 170 where discharge through the outlet opening 193 is desired. The outlet opening 194 is in communication, via a pneumatic channel 196, with the space between the sealing rings 173 and 174 that is in communication with an axial high-pressure chamber in the interior of the shaft member 170 along that part of the circumference of the shaft member 170 where discharge through the outlet opening 194 is desired. The high-pressure chamber and the low-pressure chamber in the interior of the sharp body 170 are in communication with a low-pressure source and a high-pressure source, respectively. Said connections can be interrupted as desired by means of valves which are actuated in dependence on control signals derived from visual detections made by a camera system (not shown). This makes it possible to minimise the consumption of air used for blowing off skin parts.

## Claims

1. A device for processing bulbous natural products having a natural axis, comprising processing means for processing the natural products, positioning means for presenting the natural products to the processing means, said positioning means comprising conveying means for conveying natural products to the processing means in a horizontal conveying direction, said conveying means comprising an endless flexible first conveying element which is passed over at least two first pulley means for conveying natural products, and support elements each for supporting an individual natural product, wherein the axis of the bulbous natural product extends in horizontal direction transversely to the conveying direction, which support elements are provided a regular distance apart on an outer side of the first conveying element, **characterised in that** the positioning means further comprise levelling means for arranging the central axes of natural products on successive support elements at the same level relative to the processing means.

2. A device according to claim 1, **characterised in that** the levelling means comprise at least one pair of a first pressure element and a second pressure element, which first pressure element is vertically movable between a first lower position and a first upper position, in which first lower position the first pressure element is disposed in the path of a natural product and, as a result of contact with the natural product, moves against the action of resistance means from the first lower position in the direction of the first upper position to a first intermediate position, thereby exerting a downward pressure on the upper side of the bulbous natural product, and which second pressure element abuts against the first conveying element and/or a support element from the bottom side at a position opposite the first pressure element, being vertically movable between a second upper position and a second lower position, as well as connecting means for moving the second pressure element from the second upper position in the direction of the second lower position to a second intermediate position in dependence on the extent of the movement of the first pressure element between the first lower position and the first intermediate position.

3. A device according to any one of the preceding claims, **characterised in that** the positioning means comprise a pressure belt extending at least substantially parallel to and above the first pressure element for exerting a downward pressure on natural products supported by support elements, which pressure belt is designed to be driven at the same speed as that at which the first flexible conveying element is driven.

4. A device according to any one of claims 2-3, **characterised in that** the connecting means comprise a lever mechanism both for the first pressure element and for the second pressure element, which lever mechanisms are mechanically interconnected.

5. A device according to any one of the preceding claims, **characterised in that** the processing means comprise removing means for removing material from the bulbous natural product on two opposite sides of the bulbous natural product around the natural axis thereof.

6. A device according to claim 5, **characterised in that** the removing means comprise two, preferably disc-shaped, vertical blades, which extend side by side in the path of the natural products, parallel to the conveying direction, for cutting off two opposite ends of the bulbous natural product.

7. A device according to claim 6, **characterised in that** at least one of said two vertical blades is laterally movable between an inner position and an outer position relative to the conveying direction.

8. A device according to any one of the preceding claims, **characterised in that** the processing means comprise first cutting means for forming at least one horizontal cut parallel to the conveying direction in a skin of the bulbous natural product.

9. A device according to any one of the preceding claims, **characterised in that** each support element comprises two side-by-side plate-shaped upright elements having a concave upper edge, which are oriented parallel to the conveying direction.

10. A device according to any one of the preceding claims, **characterised in that** the endless flexible first conveying element is a belt-like element.

11. A device according to any one of the preceding claims, **characterised in that** the endless flexible first conveying element is made of an elastic material.

12. A device according to any one of the preceding claims, **characterised in that** the endless flexible first conveying element is provided with evenly spaced engaging elements, which engaging elements mate with further engaging elements provided on at least one of the two first pulley means.

13. A device according to any one of the preceding claims, **characterised in that** the device comprises feeding means for feeding natural products to the conveying means, said feeding means comprising two endless flexible second conveying elements, which are each passed over at least two second pulley means which are rotatable about respective second axes of rotation, which two second conveying elements extend mirror-symmetrically relative to a vertical plane of symmetry, wherein parts of the second conveying elements extend upward in side-by-side, parallel relationship along an inclined feed path toward the first flexible conveying element, said feeding means further comprising regularly spaced pusher means provided on each of the second conveying elements for, paired together, pushing individual natural products upwards along an inclined feed path, as well as a first support element which supports the natural products during at least part of the feed path and which causes said products to rotate in such a manner that the natural axis of the bulbous natural product extends in horizontal direction, perpendicularly to the inclined feed path.

14. A device according to any one of the preceding claims, **characterised in that** the device comprises a processing station that connects to the first conveying element, which processing station comprises pairs of clamping elements which are movable along an endless, preferably circular path, clamping elements forming a pair of clamping elements being movable toward and away from each other for clampingly receiving natural products from a support element between them at a takeover position and releasing the natural products after having conveyed said natural products, clamped between the clamping elements, along part of the circular path, said processing station further comprising rotation means for jointly rotating a natural product and the clamping elements that clamp the bulbous natural product between them about aligned central axes of the clamping elements, said processing means further comprising second cutting means for making at least one circumferential vertical cut parallel to the conveying direction in the surface of the bulbous natural product during the clamped transport and during the rotation of the bulbous natural product by the rotation means.

15. A device according to any one of the preceding claims, **characterised in that** the device comprises blowing means for blowing off skin parts of natural products that have been formed by the operation of the processing means.

## Patentansprüche

1. Vorrichtung zum Verarbeiten von natürlichen Knollenprodukten mit einer natürlichen Achse, die Folgendes umfasst: Verarbeitungsmittel zum Verarbeiten der natürlichen Produkte, Positionierungsmittel, um den Verarbeitungsmitteln die natürlichen Produkte zu präsentieren, wobei die Positionierungsmittel Fördermittel zum Befördern von natürlichen Produkten zu den Verarbeitungsmitteln in einer horizontalen Förderrichtung umfassen, wobei die Fördermittel ein flexibles erstes Endlosförderelement, das über wenigstens zwei erste Rollenmittel zum Befördern von natürlichen Produkten geleitet wird, und Tragelemente jeweils zum Tragen eines einzelnen natürlichen Produkts umfassen, wobei die Achse des natürlichen Knollenprodukts in horizontaler Richtung quer zur Förderrichtung verläuft, wobei die Tragelemente in regelmäßigen Abständen auf einer äußeren Seite des ersten Förderelementes beabstandet vorgesehen sind, **dadurch gekennzeichnet, dass** die Positionierungsmittel ferner Nivellierungsmittel zum Anordnen der mittleren Achsen von natürlichen Produkten auf aufeinander folgenden Tragelementen in derselben Höhe relativ zu den Verarbeitungsmitteln umfassen.

2. Vorrichtung nach Anspruch 1, **dadurch gekennzeichnet, dass** die Nivellierungsmittel wenigstens ein Paar aus einem ersten Druckelement und einem zweiten Druckelement umfassen, wobei das erste Druckelement vertikal zwischen einer ersten unteren Position und einer ersten oberen Position beweglich ist, wobei das erste Druckelement in der ersten unteren Position in der Bahn eines natürlichen Produkts angeordnet ist und sich infolge des Kontakts mit dem natürlichen Produkt gegen die Wirkung von Widerstandsmitteln von der ersten unteren Position in Richtung der ersten oberen Position in eine erste Zwischenposition bewegt und dadurch auf die Oberseite des natürlichen Knollenprodukts einen Druck nach unten ausübt, und wobei das zweite Druckelement am ersten Förderelement und/oder einem Tragelement von der Bodenseite in einer Position gegenüber dem ersten Druckelement anstößt und vertikal zwischen einer zweiten oberen Position und einer zweiten unteren Position beweglich ist, sowie Verbindungsmittel zum Bewegen des zweiten Druckelements von der zweiten oberen Position in Richtung der zweiten unteren Position in eine zweite Zwischenposition in Abhängigkeit vom Ausmaß der Bewegung des ersten Druckelements zwischen der ersten unteren Position und der ersten Zwischenposition.

3. Vorrichtung nach einem der vorherigen Ansprüche, **dadurch gekennzeichnet, dass** die Positionierungsmittel ein Druckband umfassen, das wenigstens im Wesentlichen parallel zu und über dem ersten Druckelement verläuft, um auf von Tragelementen getragene natürliche Produkte einen Druck nach unten auszuüben, wobei das Druckband so ausgelegt ist, dass es mit derselben Geschwindigkeit angetrieben wird wie die, mit der das erste flexible Förderelement angetrieben wird.

4. Vorrichtung nach einem der Ansprüche 2-3, **dadurch gekennzeichnet, dass** die Verbindungsmittel einen Hebelmechanismus sowohl für das erste Druckelement als auch für das zweite Druckelement umfassen, wobei die Hebelmechanismen mechanisch miteinander verbunden sind.

5. Vorrichtung nach einem der vorherigen Ansprüche, **dadurch gekennzeichnet, dass** die Verarbeitungsmittel Abhubmittel zum Abheben von Material von dem natürlichen Knollenprodukt auf zwei gegenüberliegenden Seiten des natürlichen Knollenprodukts um dessen natürliche Achse umfassen.

6. Vorrichtung nach Anspruch 5, **dadurch gekennzeichnet, dass** die Abhubmittel zwei, vorzugsweise scheibenförmige, vertikale Messer umfassen, die nebeneinander in der Bahn der natürlichen Produkte, parallel zur Förderrichtung, verlaufen, um zwei entgegengesetzte Enden des natürlichen Knollenprodukts abzuschneiden.

7. Vorrichtung nach Anspruch 6, **dadurch gekennzeichnet, dass** wenigstens eines der zwei vertikalen Messer lateral zwischen einer inneren Position und einer äußeren Position relativ zur Förderrichtung beweglich ist.

8. Vorrichtung nach einem der vorherigen Ansprüche, **dadurch gekennzeichnet, dass** die Verarbeitungsmittel erste Schneidmittel zum Bilden wenigstens eines horizontalen Schnittes parallel zur Förderrichtung in einer Schale des natürlichen Knollenprodukts umfassen.

9. Vorrichtung nach einem der vorherigen Ansprüche, **dadurch gekennzeichnet, dass** jedes Tragelement zwei nebeneinander angeordnete plattenförmige aufrechte Elemente mit einem konkaven oberen Rand umfasst, die parallel zur Förderrichtung orientiert sind.

10. Vorrichtung nach einem der vorherigen Ansprüche, **dadurch gekennzeichnet, dass** das flexible erste Endlosförderelement ein bandähnliches Element ist.

11. Vorrichtung nach einem der vorherigen Ansprüche, **dadurch gekennzeichnet, dass** das flexible erste Endlosförderelement aus einem elastischen Material besteht.

12. Vorrichtung nach einem der vorherigen Ansprüche, **dadurch gekennzeichnet, dass** das flexible erste Endlosförderelement mit gleichmäßig beabstandeten Eingriffselementen versehen ist, wobei die Eingriffselemente mit weiteren Eingriffselementen in Eingriff kommen, die auf wenigstens einem der zwei ersten Rollenmittel vorgesehen sind.

13. Vorrichtung nach einem der vorherigen Ansprüche, **dadurch gekennzeichnet, dass** die Vorrichtung Zuführungsmittel zum Zuführen von natürlichen Produkten zu den Fördermitteln umfasst, wobei die Zuführungsmittel zwei flexible zweite Endlosförderelemente umfassen, die jeweils über wenigstens zwei zweite Rollenmittel geleitet werden, die um jeweilige zweite Drehachsen drehbar sind, wobei die zwei zweiten Förderelemente spiegelsymmetrisch relativ zu einer vertikalen Symmetrieebene verlaufen, wobei Teile der zweiten Förderelemente Seite an Seite in einer parallelen Beziehung entlang einer geneigten Zuführungsbahn zu dem ersten flexiblen Förderelement nach oben verlaufen, wobei die Zuführungsmittel ferner regelmäßig beabstandete Schiebemittel, die auf jedem der zweiten Förderelemente vorgesehen sind, um miteinander gepaart einzelne natürliche Produkte nach oben entlang einer geneigten Zuführungsbahn zu schieben, sowie ein erstes Tragelement umfassen, das die natürlichen Produkte auf wenigstens einem Teil der Zuführungsbahn trägt und bewirkt, dass die Produkte auf eine solche Weise rotieren, dass die natürliche Achse des natürlichen Knollenprodukts in horizontaler Richtung lotrecht zu der geneigten Zuführungsbahn verläuft.

14. Vorrichtung nach einem der vorherigen Ansprüche, **dadurch gekennzeichnet, dass** die Vorrichtung eine Verarbeitungsstation umfasst, die mit dem ersten Förderelement verbunden ist, wobei die Verarbeitungsstation Paare von Klemmelementen umfasst, die entlang einer endlosen, vorzugsweise kreisförmigen Bahn beweglich sind, wobei Klemmelemente, die ein Paar Klemmelemente bilden, zueinander hin und voneinander weg bewegt werden können, um natürliche Produkte zwischen sich an einer Übernahmeposition von einem Tragelement klemmend aufzunehmen und die natürlichen Produkte nach dem Befördern der zwischen den Klemmelementen eingeklemmten natürlichen Produkte über einen Teil der kreisförmigen Bahn freizugeben, wobei die Verarbeitungsstation ferner Drehmittel zum gemeinsamen Drehen eines natürlichen Produkts und der das natürliche Knollenprodukt zwischen sich einklemmenden Klemmelemente um ausgerichtete mittlere Achsen der Klemmelemente umfasst, wobei die Verarbeitungsmittel ferner zweite Schneidmittel zum Ausführen wenigstens eines umfangsmäßigen vertikalen Schnittes parallel zur Förderrichtung in der Oberfläche des natürlichen Knollenprodukts während des geklemmten Transports und während der Rotation des natürlichen Knollenprodukts durch die Drehmittel umfassen.

15. Vorrichtung nach einem der vorherigen Ansprüche, **dadurch gekennzeichnet, dass** die Vorrichtung Blasmittel zum Abblasen von Schalenteilen natürlicher Produkte umfasst, die durch den Betrieb der Verarbeitungsmittel gebildet wurden.

## Revendications

1. Dispositif de traitement de produits naturels bulbeux avec un axe naturel, comprenant des moyens de traitement pour le traitement des produits naturels, des moyens de positionnement pour la présentation des produits naturels aux moyens de traitement, lesdits moyens de positionnement comprenant des moyens de transport pour le transport des produits naturels vers les moyens de traitement dans une direction de transport horizontale, lesdits moyens de transport comprenant un premier élément de transport flexible sans fin qui passe sur au moins deux premiers moyens de poulie pour le transport de produits naturels, et des éléments de support pour supporter chacun un produit naturel individuel, dans lequel l'axe du produit naturel bulbeux s'étend dans une direction horizontale transversalement à la direction de transport, lesquels éléments de support sont prévus à une distance régulière sur un côté extérieur du premier élément de transport, **caractérisé en ce que** les moyens de positionnement comprennent en outre des moyens de mise à niveau pour disposer les axes centraux des produits naturels sur des éléments de support successifs au même niveau que les moyens de traitement.

2. Dispositif selon la revendication 1, **caractérisé en ce que** les moyens de mise à niveau comprennent au moins une paire d'un premier élément de pression et d'un second élément de pression, lequel premier élément de pression est mobile verticalement entre une première position inférieure et une première position supérieure, dans laquelle première position inférieure, le premier élément de pression est disposé dans la voie d'un produit naturel et suite au contact avec celui-ci, se déplace contre l' action de moyens de résistance de la première position inférieure en direction de la première position supérieure à une première position intermédiaire, exerçant par là même une pression vers le bas sur le côté supérieur du produit naturel bulbeux, et lequel second élément de pression bute contre le premier élément de transport et/ou un élément de support depuis le côté inférieur dans une position opposée au premier élément de pression, étant verticalement mobile entre une seconde position supérieure et une seconde position inférieure, ainsi que des moyens de liaison pour déplacer le second élément de pression de la seconde position supérieure en direction de la seconde position inférieure à une seconde position intermédiaire selon l'étendue du mouvement du premier élément de pression entre la première position inférieure et la première position intermédiaire.

3. Dispositif selon l'une quelconque des revendications précédentes, **caractérisé en ce que** les moyens de positionnement comprennent une bande de pression s'étendant au moins sensiblement parallèlement et au-dessus du premier élément de pression pour exercer une pression vers le bas sur des produits naturels supportés par des éléments de support, laquelle bande de pression est conçue pour être entraînée à la même vitesse que celle à laquelle le premier élément de transport flexible est entraîné.

4. Dispositif selon l'une quelconque des revendications 2 à 3, **caractérisé en ce que** les moyens de liaison comprennent un mécanisme à levier à la fois pour le premier et le second élément de pression, lesquels mécanismes de levier sont mécaniquement reliés.

5. Dispositif selon l'une quelconque des revendications précédentes, **caractérisé en ce que** les moyens de traitement comprennent des moyens de retrait pour retirer le matériau du produit naturel bulbeux sur deux côtés opposés du produit naturel bulbeux autour de son axe naturel.

6. Dispositif selon la revendication 5, **caractérisé en ce que** les moyens de retrait comprennent deux lames verticales de préférence en forme de disque qui s'étendent côte à côte dans la voie des produits naturels parallèlement à la direction de transport pour couper des extrémités opposées du produit naturel bulbeux.

7. Dispositif selon la revendication 6, **caractérisé en ce qu'**au moins une desdites deux lames verticales est latéralement mobile entre une position intérieure et une position extérieure par rapport à la direction de transport.

8. Dispositif selon l'une quelconque des revendications précédentes, **caractérisé en ce que** les moyens de traitement comprennent des premiers moyens de coupe pour former au moins une coupe horizontale parallèlement à la direction de transport dans une peau du produit naturel bulbeux.

9. Dispositif selon l'une quelconque des revendications précédentes, **caractérisé en ce que** chaque élément de support comprend deux éléments verticaux en forme de plaque côte à côte avec une arête supérieure concave, lesquels sont orientés parallèlement à la direction de transport.

10. Dispositif selon l'une quelconque des revendications précédentes, **caractérisé en ce que** le premier élément de transport flexible sans fin est un élément de type bande.

11. Dispositif selon l'une quelconque des revendications précédentes, **caractérisé en ce que** le premier élément de transport flexible sans fin est en un matériau élastique.

12. Dispositif selon l'une quelconque des revendications précédentes, **caractérisé en ce que** le premier élément de transport flexible sans fin est doté d'éléments d'engagement régulièrement espacés qui s'accouplent avec d'autres éléments d'engagement prévus sur au moins un des deux premiers moyens de poulie.

13. Dispositif selon l'une quelconque des revendications précédentes, **caractérisé en ce que** le dispositif comprend des moyens d'alimentation pour alimenter les moyens de transport en produits naturels, lesdits moyens d'alimentation comprenant deux seconds éléments de transport flexibles sans fin qui passent chacun sur au moins deux seconds moyens de poulie qui sont rotatifs autour de seconds axes de rotation respectifs, lesquels deux seconds éléments de transport s'étendent de manière symétrique par rapport à un plan vertical de symétrie, dans lequel des parties des seconds éléments de transport s'étendent vers le haut côte à côte parallèlement le long d'une voie d'alimentation inclinée vers le premier élément de transport flexible, lesdits moyens d'alimentation comprenant en outre des moyens de poussée espacés régulièrement prévus sur chacun des seconds éléments de transport pour pousser, lorsqu'ils sont appariés ensemble, des produits naturels individuels vers le haut le long d'une voie d'alimentation inclinée, ainsi qu'un premier élément de support qui supporte les produits naturels pendant au moins une partie de la voie d'alimentation et qui fait tourner lesdits produits de telle manière que l' axe naturel du produit naturel bulbeux s'étende dans la direction horizontale perpendiculairement à la voie d'alimentation inclinée.

14. Dispositif selon l'une quelconque des revendications précédentes, **caractérisé en ce que** le dispositif comprend un poste de traitement qui est relié au premier élément de transport, lequel poste de traitement comprend des paires d'éléments de serrage qui sont mobiles le long d'une voie sans fin, de préférence circulaire, des éléments de serrage formant une paire d'éléments de serrage pouvant s' approcher et s'éloigner l'un de l'autre pour recevoir par serrage des produits naturels d'un élément de support entre eux dans une position de réception et libérer les produits naturels après les avoir transportés, serrés entre les éléments de serrage le long de partie de la voie circulaire, ledit poste de traitement comprenant en outre des moyens de rotation pour tourner conjointement un produit naturel et les éléments de serrage qui serrent le produit naturel bulbeux entre eux autour d'axes centraux alignés des éléments de serrage, lesdits moyens de traitement comprenant en outre des seconds moyens de coupe pour faire au moins une coupe verticale circonférentielle parallèlement à la direction de transport dans la surface du produit naturel bulbeux pendant le transport serré et pendant la rotation du produit naturel bulbeux par les moyens de rotation.

15. Dispositif selon l'une quelconque des revendications précédentes, **caractérisé en ce que** le dispositif comprend des moyens de soufflage pour souffler des parties de peau de produits naturels qui ont été formées par le fonctionnement des moyens de traitement.
